(19) Europäisches Patentamt
European Patent Office
Office européen des brevets

(11) Publication number: **0 569 194 A1**

(12) **EUROPEAN PATENT APPLICATION**

(21) Application number: **93303376.3**

(22) Date of filing: **29.04.93**

(51) Int. Cl.[5]: **C08L 75/02,** C09D 175/02, C08G 18/50, C08G 18/32, // (C08L75/02, 75:00), (C09D175/02, 175:00)

(30) Priority: **04.05.92 US 878248**

(43) Date of publication of application: **10.11.93 Bulletin 93/45**

(84) Designated Contracting States: **DE FR GB**

(71) Applicant: **TEXACO CHEMICAL COMPANY**
**3040 Post Oak Boulevard**
**Houston, Texas 77056 (US)**

(72) Inventor: **Grigsby, Robert Allison, Jr.**
**7404 Fireoak Drive**
**Austin, Texas 78761 (US)**
Inventor: **Dominguez, Richard J.G.**
**8104 Matchlock Cove**
**Austin, Texas 78729 (US)**
Inventor: **Primeaux II, Dudley Joseph**
**Route 4, Box 229-B4**
**Elgin, Texas 78621 (US)**
Inventor: **Cuscurida, Michael**
**3543 Greystone No. 1056**
**Austin, Texas 78731 (US)**

(74) Representative: **Brock, Peter William et al**
**URQUHART-DYKES & LORD 91 Wimpole Street**
**London W1M 8AH (GB)**

(54) **Production of polyureas using recycled polyurethanes and polyureas.**

(57) Already-prepared polyureas and polyurethanes, such as scrap from RIM processes, can be recycled by dissolving them in polyoxyalkyleneamines and reacted with polyisocyanates.

The solutions of polyureas and polyurethanes in polyoxyalkylene amines can be reacted with polyisocyanates to form polyureas in RIM, spray, foam or thermoplastic materials or in paints.

EP 0 569 194 A1

Jouve, 18, rue Saint-Denis, 75001 PARIS

This invention concerns the field of materials made by reacting a polyoxyalkyleneamine with an isocyanate wherein the polyoxyalkyleneamine has dissolved therein materials made by reacting an active hydrogen compound with an isocyanate.

US-A-4396729, US-A-4444910 and US-A-4333067 concern elastomers prepared using a high molecular weight amine terminated polyether, an aromatic diamine chain extender and an aromatic polyisocyanate which may be a simple polyisocyanate or a quasi-prepolymer having free NCO-groups prepared by reacting a polyol with excess polyisocyanate.

US-A-4552933 and US-A-4578412 disclose dissolving polyurethane and polyurea materials in a polyoxyalkyleneamine and then using that polyoxyalkyleneamine to cure epoxy resins.

US-A-4439546 discloses dissolving scrap RIM into certain polyester polyols and then making foams.

US-A-4514530 discloses dissolving a RIM polyurethane in an alkylene carbonate, and adding this solution to a polyoxyalkylene. The resulting mixture or solution is then used as an epoxy-curing composition.

It has now been discovered that the polyoxyalkyleneamine materials containing dissolved polyurethane and polyurea materials may be used to react with isocyanate materials and other ingredients as necessary to form reaction injection moulded materials, spray materials, foam materials, paints and thermoplastic materials. The terms polyoxyalkyleneamine, polyether polyamine and amine-terminated polyether are synonymous, and may be used interchangeably herein.

This invention provides a method for making polyureas by reacting a polyisocyanate with a polyoxyalkyleneamine, in which the polyoxyalkyleneamine contains in solution the reaction product of a polyisocyanate and an active hydrogen compound. According to the invention, any materials made by reacting an active hydrogen-containing material with a polyisocyanate may be dissolved in a polyoxyalkyleneamine, and this solution is further reacted with a polyisocyanate, and other ingredients as necessary, to form polyureas, e.g. as reaction injection moulded elastomers, spray foams, spray elastomers, foam materials, paints and thermoplastic materials.

The principal components in this invention are the polyoxyalkyleneamine solvent, the material made by reacting an active hydrogen material with a polyisocyanate, which is dissolved in the polyoxyalkyleneamine, and the polyisocyanate used to react with the resulting solution.

## THE POLYETHER POLYAMINE

The polyoxyalkyleneamine useful in the invention will dissolve materials made by reacting an active hydrogen containing material with an isocyanate. These materials to be dissolved will be discussed further, but briefly include urethane and/or urea thermoplastic materials, urea and/or urethane foam materials, urethane and/or urea reaction injected moulded materials, urethane and/or urea spray materials, and urethane and/or urea paints or coatings. In fact, any material formed by the reaction of an isocyanate with an active hydrogen e.g. in hydroxyl groups -NH or $NH_2$ groups and even water, may be recycled by dissolving it in a polyoxyalkyleneamine as described herein. The polyoxyalkyleneamines containing the dissolved materials may then be reacted further with a polyisocyanate, and other ingredients as necessary, to form reaction injection moulded materials, spray materials, foam materials, paints and thermoplastic materials.

Particularly useful amines are the amines derived from polyoxyalkylene diols, triols and tetrols, although amines derived from monols are also useful.

According to the invention, we can employ polyoxypropylene diamines of the formula:

$$H_2NCH(CH_3)CH_2\text{-}[OCH_2CH(CH_3)]_xNH_2 \qquad \text{I}$$

wherein x is 2 to 68, preferably 2 to 40. Alternatively, we can employ polyoxypropylene triamines of the formula:

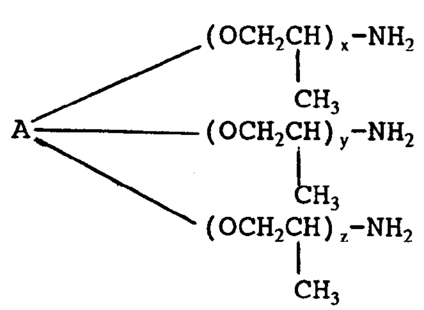

II

wherein A is the residue of a triol initiator, and x, y and z are each 1 to 28, and the sum of x, y and z is 3 to 85. The most preferred polyoxypropylene triamines of this formula have average molecular weights between 230, (when the sum of x, y and z averages 2.6) to 5,000 (when the sum of x, y, z is about 85). These polyoxypropylene di- and triamines are readily available commercially in a wide variety of molecular weight ranges.

Also useful are amines having the formula:

$$H_2NCH(CH_3)CH_2[OCH(CH_3)CH_2]_x\text{-}[OCH_2CH_2]_y\text{-}[OCH_2CH(CH_3)]_zNH_2 \qquad III$$

wherein x+z is 2 to 10, and y is 1 to 50.

Other polyoxyalkylene diamines can be represented by the formula:

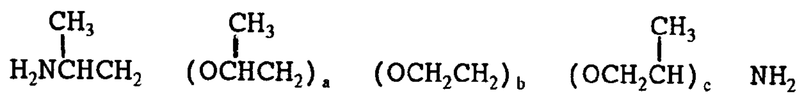

IV

| | Approximate value of | |
|---|---|---|
| MOLECULAR WEIGHTS | b | a+c |
| 600 | 8.5 | 2.5 |
| 900 | 15.5 | 2.5 |
| 2000 | 40.5 | 2.5 |

The above structure shows that these compounds may be regarded as essentially poly(oxyethylene)-based diamines, with the oxypropyl groups adding little to their molecular weights.

These poly(oxyethylene)diamines are aliphatic primary diamines structurally derived from propylene oxide-capped polyethylene glycol.

## THE MATERIALS TO BE DISSOLVED IN THE POLYOXYALKYLENEAMINES

In general materials formed by the reaction of a hydroxyl group (-OH) including water, alcohols, glycols, polyethers, polyesters, polyoxyalkylenediols and polyols with isocyanates may be dissolved in the polyoxyalkyleneamine materials described above. Also, materials formed by reacting active hydrogen groups containing nitrogen (-NH and/or $-NH_2$) with isocyanate materials would also dissolve in polyoxyalkyleneamine materials described above. The polyoxyalkyleneamine materials are particularly useful for dissolution of these materials, whereas materials such as polyether polyols do not readily dissolve the above recited materials. Thus, the method of our invention provides an easy way to recycle thermoplastic urethane and/or urea materials, urea and/or urethane foam materials, urethane and/or urea RIM materials (reaction injection moulded), urethane and/or urea spray materials and urethane and/or urea paints and coatings.

The amount of the above materials which may be dissolved in the polyoxyalkyleneamines varies with the type of material to be dissolved, and the polyoxyalkyleneamine chosen as solvent. In general the polyoxyalkyleneamine solvent rises in viscosity as more material described is dissolved in it. Although we do not wish to be limited to set amounts, broad guidelines may be stated as follows: up to 30% by weight of the dissolved material may be used, but it is preferred to use up to 20%. In order to process successful products after dissolution, it is especially prefer to use up to 15 wt.% of dissolved materials in the polyoxyalkyleneamine. US-A-4552933 and US-A-4578412 describe illustrative methods of dissolving materials useful here in polyoxyalkyleneamines.

## MATERIALS MADE BY REACTING A POLYISOCYANATE WITH A SOLUTION OF A MATERIAL MADE BY REACTING AN ACTIVE HYDROGEN WITH A POLYISOCYANATE IN A POLYETHER POLYAMINE

The following patents are illustrative of well known methods for making materials from polyoxyalkyleneamines: US-A-4396729; US-A-4444910; US-A-4333067; US-A-5013813; and US-A-4891086. Other methods are known to those skilled in the art.

As stated before, the polyether polyamine containing dissolved material recited above, may be used to

make reaction injection moulded elastomers, spray materials, foam materials, paints, and thermoplastics. The methods for making these materials are well known in the art, and generally require the reaction of the polyoxyalkyleneamine containing the dissolved materials with an isocyanate. Other ingredients may be added to the formulations as necessary for the particular application, including other polyether polyamine not containing dissolved material, chain extenders, fillers, catalyst, blowing agents, foam stabilizer, and dyes.

Particularly useful polyoxyalkyleneamines that may be used according to our invention include primary and secondary amine-terminated polyether polyols of greater than 1,500 average molecular weight, having from 2 to 6 functionality, and an amine equivalent weight from 750 to 4,000. Mixtures of amine-terminated polyethers may be used. A detailed discussion of the materials may be found above.

In the practice of this invention, a single high molecular weight amine-terminated polyether resin may be used. Also, mixtures of high molecular weight amine-terminated polyols, such as mixtures of di- and trifunctional materials and/or materials of different molecular weight or different chemical composition may be used.

The amine-terminated diamine chain extenders useful in this invention include, for example, 1-methyl-3,5-diethyl-2,4-diaminobenzene, 1-methyl-3,5-diethyl-2,6-diaminobenzene (both of these materials are also called diethyltoluene diamine or DETDA), 1,3,5-triethyl-2,6-diaminobenzene, or 3,5,3',5'-tetraethyl-4,4"-diaminodiphenylmethane. Particularly preferred aromatic diamine chain extenders are 1-ethyl-3,5-diethyl-2,4-diaminobenzene, or a mixture of this compound with 1-methyl-3,5-diethyl-2,6-diaminobenzene. It is within the scope of this invention to include some aliphatic chain extender materials as described in US-A-4246363 and US-A-4269945. Hydroxyl-containing chain extenders may also be useful for certain applications. Ethylene glycol and 1,4-butanediol are illustrative of many well known hydroxyl containing chain extenders useful in certain applications known to those skilled in the art.

A wide variety of aromatic or aliphatic polyisocyanates may be used. Typical aromatic polyisocyanates include p-phenylene diisocyanate, polymethylene polyphenylisocyanate, 2,6-toluene diisocyanate, dianisidine diisocyanate, bitolylene diisocyanate, naphthalene-1,4-diisocyanate, bis(4-isocyanatophenyl)methane, bis (3-methyl-4-isocyanatophenyl)methane and 4,4'-diphenylpropane diisocyanate.

Other useful aromatic polyisocyanates are methylene-bridged polyphenyl polyisocyanate mixtures which have a functionality of 2 to 4; see, for example, US-A-2683730; US-A-2950263; US-A-3012008; US-A-3344162 and US-A-3362979.

In some applications, a preferred polyaromatic polyisocyanate is methylene bis(4-phenylisocyanate) or MDI, e.g. in the form of pure MDI, quasi-prepolymers of MDI, or modified pure MDI. Materials of this type may be used to prepare suitable RIM elastomers. Since pure MDI is a solid and, thus, often inconvenient to use, liquid products based on MDI are often used and are included in the scope of the terms MDI or methylene bis(4-phenylisocyanate) used herein. US-A-3394164 discloses an example of a liquid MDI product. More generally, uretonimine modified pure MDI is included also. This product is made by heating pure distilled MDI in the presence of a catalyst. the liquid product is a mixture of pure MDI and modified MDI:

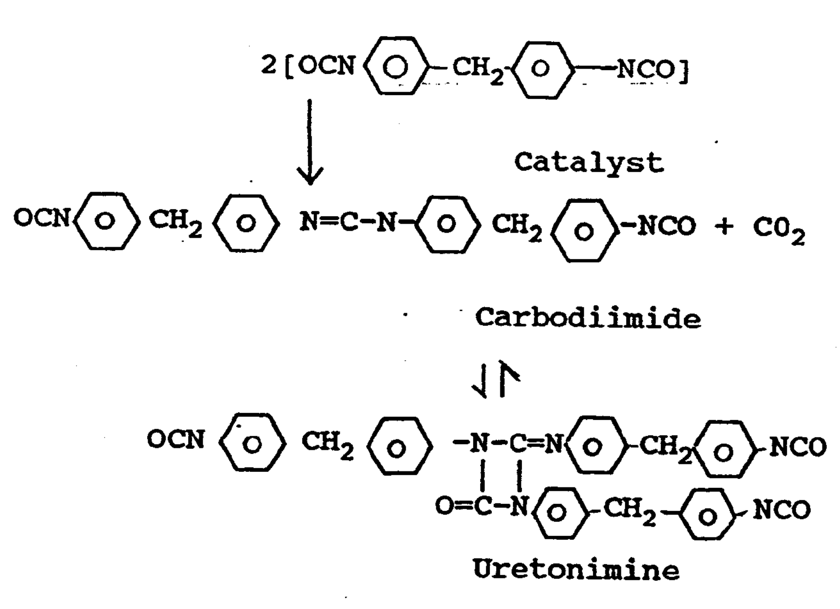


Examples of a commercial materials of this type are Dow's ISONATE® 125M (pure MDI) and ISONATE® 143L.

Preferably, the amount of isocyanates used in the stoichiometric amount, based on all the ingredients in the formulation.

Tertiary amines that can be used as catalysts include trialkylamines, (e.g. trimethylamine or triethylamine), heterocyclic amines, such as N-alkylmorpholines (e.g., N-methylmorpholine, N-ethylmorpholine), dimethyldiaminodiethylether, 1,4-dimethylpiperizine and triethylenediamine; and aliphatic polyamines such as N,N,N',N'-tetramethyl-1,3-butanediamine.

Useful organometallic compounds (and other metal compounds) as catalyst include compounds of bismuth, lead, tin, titanium, iron, antimony, uranium, cadmium, cobalt, thorium, aluminium, mercury, zinc, nickel, cerium, molybdenum, vanadium, copper, manganese or zirconium. Some examples of these metal catalysts include bismuth nitrate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycolate, and tin glycolates, etc. Selection of the individual catalysts and proportions to use in the polyurethane reaction are well within the knowledge of those skilled in the art, and an amine and organometallic compound are often used together in the reaction.

The formulation may include other recognized ingredients, such as additional cross-linkers, catalysts, extenders, blowing agents, foam stabilizers, dyes, chipped or milled glass fibres, chopped or milled carbon fibres and/or other mineral fibres.

PREPARATION OF THE DISSOLVED MATERIAL IN THE POLYETHER POLYAMINE

In accordance with the present invention, for example, polyurethane elastomer, such as a RIM elastomer, is comminuted and then dissolved in a polyether polyamine of the type described herein. This is a straightforward operation that can be performed in any suitable reaction vessel, such as an autoclave provided with agitation means and means for heating its contents. The described quantity of the amine curing agent is placed in the vessel, and brought to a desired temperature with agitation, preferably under an inert atmosphere. The temperature to be utilized will be, in part, a function of the temperature at which the urethane elastomer will dissolve. It has been found that this normally will occur at a temperature within the range from 100 to 300°C.

In accordance with a modified procedure, which is particularly useful when the material is not soluble in the amine to be used as a curing agent or is only sparingly soluble, the elastomer is first dissolved in a polar organic solvent in which it is soluble, such as dimethylformamide, glycol ethers such as ethylene glycol, diethylether, ethylene glycol dibutylether, or ethylene glycol acetates such as ethylene glycol diacetate. This step is performed as described above with respect to the amine, in a suitable reaction vessel such as an autoclave and at an appropriate temperature. After the solution is formed, it is mixed with the desired polyoxyalkylene amine, and the solvent is then removed from the resultant mixture, for example, by vacuum distillation.

EXAMPLES

Quasi-prepolymer A

The preparation of standard quasi-prepolymer A is as follows:

PPG-2000 (200 lbs/91 Kg) was added to a partial drum containing Isonate® 143L (300 lbs/136 Kg). The contents of the drum were rolled for several hours. After sitting for several days, the product was ready to use.

Example 1

JEFFAMINE® D-2000 (90.0 grams), and polyurea foam (10.0 grams) were charged into a half pint (0.25 l) bottle and heated to 210°C for 2 hours. Upon cooling, the liquid material showed no signs of having any undissolved foam present in the sample.

Example 2

JEFFAMINE® T-5000 (30.0 lbs/13.6 Kg) was charged into a 5 gallon (16 l) nitrogen purged reactor and heated to 150°C. Small strips of polyurea foam (3.34 lbs/1.5 Kg) were added to the stirred reactor. After all of the foam was added, the reactor was heated to 180°C for two hours. The yellow liquid material was cooled and drained into a five gallon (16 l) vessel. The analyses of the liquid product were as follows: Total acetylatables 0.62 meq/g, total amine 0.46 meq/g and viscosity at 25°C, 8904 cs.

Example 3

The procedure of Example 2 was repeated using JEFFAMINE® D-2000 (30.0 lbs/13.6 Kg). There was a small amount of trash on the filter paper after filtering the yellow liquid product. The analyses of the liquid product were as follows: Total acetylatables 0.97 meq/g, total amine 0.84 meq/g and viscosity at 25°C, 966 cs.

Example 4

JEFFAMINE® D-2000 (30.0 lbs/13.6 Kg) was charged into a 5 gallon (16 l) nitrogen purged reactor and heated to 150°C. Small strips of polyurea foam (5.01 lbs/2.27 Kg) were added to the stirred reactor. After all of the foam was added, the reactor was heated to 180°C for two hours. The yellow liquid material was then cooled and drained into a five gallon (16 l) vessel. The analyses of the liquid product were as follows: Total acetylatables 0.94 meq/g, total amine 0.82 meq/g and viscosity at 25°C, 1644 cs.

Example 5

JEFFAMINE® T-5000 (30.0 lbs/13.6 Kg) was charged into a 5 gallon (16 l) nitrogen purged reactor and heated to 150°C. Small strips of polyurea foam (2.8 lbs/1.27 Kg) were added to the stirred reactor. After all of the foam was added, the reactor was heated to 180°C for two hours. The yellow liquid material was then cooled to 110°C and stripped of a small amount of lights that were collected in the cold trap of a vacuum system. The material was then drained into a five gallon (16 l) vessel. The analyses of the liquid product were as follows: Total acetylatables 0.59 meq/g, total amine 0.46 meq/g and viscosity at 25°C, 7229 cs.

Example 6

JEFFAMINE® T-5000 (30.0 lbs/13.6 Kg), deionized water (2.0 lbs/0.9 Kg) and polyurea foam (2.8 lbs/1.27 Kg) were charged into a 5 gallon (16 l) nitrogen purged reactor and heated to 150°C for two hours. The yellow liquid material was then cooled to 110°C and stripped of any lights and water that might be remaining in the material. The material was then drained into a five gallon (16 l) vessel. The analyses of the liquid product from the reactor were as follows: Total acetylatables 0.58 meq/g, total amine 0.48 meq/g and viscosity at 25°C, 9074 cs.

Example 7

G-5000 (30.0 lbs/13.6 Kg), a five thousand molecular weight propylene oxide triol and polyurea foam (2.8 lbs/1.27 Kg) were charged into a 5 gallon (16 l) nitrogen purged reactor and heated to 180°C for two hours. Upon inspection of the inside of the reactor, it was seen that the foam was not dissolved. In order to remove the material from the rector, JEFFAMINE® D-2000 (10.0 lbs/4.5 Kg) was added to the reactor and heated to 180°C for two hours. The addition of the JEFFAMINE® amine product dissolved the foam. The material was drained from the reactor and discarded.

Table 1

| Example # | 2 | 3 | 4 | 5 | 6 | 7 |
|---|---|---|---|---|---|---|
| JEFFAMINE® T-5000, lbs / Kg | 30.0/13.6 | | | 30.0/13.6 | 30.0/13.6 | |
| JEFFAMINE® D-2000, lbs / Kg | | 30.0/13.6 | 30.0/13.6 | | | 30.0/13.6 |
| G-5000, lbs / Kg | | | | | | |
| Polyurea Foam, lbs / Kg (%) | 3.34/1.52 (10.0) | 3.34/1.52 (10.0) | 5.01/2.27 (14.3) | 2.8/1.27 (8.5) | 2.8/1.27 (10.0) | 2.8/1.27 (10.0) |
| Reaction Temperature, °C | 180 | 180 | 180 | 180 | 150 | 180 |
| Reaction Time, h | 2 | 2 | 2 | 2 | 2 | 2 |
| Total Acetlytables, meq/g | 0.62 | 0.97 | 0.94 | 0.59 | 0.58 | |
| Total Amines, meq/g | 0.45 | 0.84 | 0.82 | 0.46 | 0.48 | |
| Viscosity, 25°C | 8904 | 966 | 1644 | 7229 | 9074 | |

The mould used in the following Examples 8 to 26 was a flat plaque mould having dimensions of 18 inch (457 mm) x 18 inch (457 mm) x 1/8 inch (3 mm).

Example 8 (Control Experiment)

30.0 pounds (13.6 Kg) of a formulation consisting of DETDA (8.56 lbs/3.89 Kg) JEFFAMINE® T-5000 (20.86 lbs/9.47 Kg) and zinc stearate (0.58 lbs/0.26 Kg) were charged into the B-component working tank of a Hi-Tech RIM machine. The contents of this tank were heated to 150°F (65.5°C). The A-tank on the RIM machine was charged with quasi-prepolymer A and heated to 130°F (54.5°C). The components were pressurized up to 2500 psi (17.3 MPa) on the A side and 2500 psi (17.3 MPa) on the B side and injected into the mould which had been preheated to 160°F (71°C). The part was removed from the mould in 30 seconds. The resulting elastomer was post-cured at 250°F (121°C) for one hour. Physical properties of the elastomer are listed in Table 2.

Example 9

30.0 pounds (13.6 Kg) of a formulation consisting of DETDA (7.94 lbs/3.60 Kg), the product of Example 2 (21.52 lbs/9.77 Kg) and zinc stearate (0.54 lbs/0.25 Kg) were charged into the B-component working tank of a Hi-tech RIM machine. The contents of this tank were heated to 148°F (64.5°C). The A-tank on the RIM machine was charged with quasi-prepolymer A and heated to 131°F (55°C). The components were pressurized up to 2500 psi (17.3 MPa) on the A side and 2500 psi (17.3 MPa) on the B side and injected into the mould which had been preheated to 160°F (71°C). The part was removed from the mould in 30 seconds. The resulting elastomer was post-cured at 250°F (121°C) for one hour. Physical properties of the elastomer are listed in Table 2.

Example 10

30.0 pounds (13.6 Kg) of a formulation consisting of DETDA (7.65 lbs/3.47 Kg), the product of Example 3 (21.83 lbs/9.91 Kg) and zinc stearate (0.52 lbs/0.24 Kg) were charged into the B-component working tank of a Hi-tech RIM machine. The contents of this tank were heated to 152°F (66.7°C). The A-tank on the RIM machine was charged with quasi-prepolymer A and heated to 132°F (55.5°C). The components were pressurized up to 2500 psi (17.3 MPa) on the A side and 2500 psi (17.3 MPa) on the B side and injected into the mould which had been preheated to 160°F (71°C). The part was removed from the mould in 30 seconds. The resulting elastomer was post-cured at 250°F (121°C) for one hour. Physical properties of the elastomer are listed in Table 2.

Table 2

| Example # | 8 | 9 | 10 |
|---|---|---|---|
| Formulation, pbw | | | |
| DETDA | 13.93 | 13.93 | 13.93 |
| JEFFAMINE® T-5000, | 33.95 | | |
| Example 2 | | 37.73 | |
| Example 3 | | | 39.72 |
| Zinc Stearate | 0.95 | 0.95 | 0.95 |
| Quasiprepolymer A | 49.11 | 49.11 | 54.21 |
| PROPERTIES | | | |
| Shore D | 67/63 | 67/63 | 61/56 |
| Tensile, psi / MPa | 4039 / 27.85 | 4075 / 28.10 | 4128 / 28.46 |
| Tear, pli / N/m | 591 / 1035 | 616 / 1079 | 585 / 1024 |
| Elongation, % | 231 | 274 | 249 |
| Flexural Modulus, psi / MPa | | | |
| 77°F / 25°C | 49150 / 339 | 49058 / 338 | 45024 / 310 |
| -20°F / -29°C | 87792 / 605 | 80914 / 558 | 93715 / 646 |
| Heat sag, 1500 mm overhang | | | |
| 311°F / 155°C | 27 | 42.25 | 54.8 |
| Green Strength, lbs / Kg | 14 / 6.4 | 15.8 / 7.2 | 11.25 / 5.1 |

The RIM scrap can be dissolved into polyetherpolyamines as described below in the Examples 11-21.

In Example 22, the polyol precursor to JEFFAMINE® T-5000 was tested to determine if it would dissolve the RIM scrap in a manner similar to polyetherpolyamines. It would not.

Two experiments were carried out with DEDTA added to the reactive amine components (Examples 17 and 18). In Example 17, the viscosity of the material is higher than if it were made with no DETDA (Examples 21, 22, 11, 13 and 14). When 15% of scrap RIM was used in a blend containing DETDA, the finished product was a solid (Example 18). The corresponding example (Example 16), in which no DETDA was used, provided a liquid product having a viscosity of 5763 cs.

Addition of zinc stearate to the reaction mixture decreased the viscosity of the resulting product (see Examples 20 and 19), but it did make the material hazy in appearance. Zinc stearate helped to break up the scrap polyurea RIM in the reaction medium. Other catalysts could also be used to decrease the viscosity of the resulting material.

Example 11

JEFFAMINE® T-3000 (15.9 lbs/7.2 Kg), JEFFAMINE® D-2000 (15.9 lbs/7.2 Kg), and scrap RIM (3.18 lbs/1.4 Kg) were charged into a 5 gallon (16 1) nitrogen purged reactor. The contents of the reactor were heated under nitrogen to 230°C for two hours. HiFlo Super Cell (2000 $cm^3$) was added to the stirred reaction mixture and the mixture was filtered into a 5 gallon (16 l) vessel. The analyses of the liquid product were as follows: Total acetylatables 1.04 meq/g, total amine 0.88 meq/g and viscosity at 25°C, 2168 cs.

Example 12

JEFFAMINE® T-5000 (22.05 lbs/10.0 Kg), JEFFAMINE® D-2000 (9.45 lbs/4.3 Kg), and scrap RIM (3.50 lbs/1.6 Kg) were charged into a 5 gallon (16 1) nitrogen purged reactor. The contents of the reactor were heated under nitrogen to 240°C for two hours. HiFlo Super Cell (2000 $cm^3$) was added to the stirred reaction mixture and the mixture was filtered into a 5 gallon (16 l) vessel. The analyses of the liquid product were as follows: Total acetylatables 0.81 meq/g, total amine 0.63 meq/g and viscosity at 25°C, 8225 cs.

Example 13

JEFFAMINE® T-3000 (12.5 lbs/5.7 Kg), JEFFAMINE® D-2000 (12.5 lbs/5.7 Kg), and scrap RIM (2.50 lbs/1.1 Kg) were charged into a 5 gallon (16 1) nitrogen purged reactor. The contents of the reactor were heated under nitrogen to 220°C for two hours. The mixture was drained into a 5 gallon (16 l) vessel. The analyses of the liquid product were as follows: Total acetylatables 1.03 meq/g, total amine 0.87 meq/g and viscosity at 25°C, 2054 cs.

Example 14

JEFFAMINE® T-3000 (12.5 lbs/5.7 Kg), JEFFAMINE® D-2000 (12.5 lbs/5.7 Kg) and scrap RIM (2.50 lbs/1.1 Kg) were charged into a 5 gallon (16 1) nitrogen purged reactor. The contents of the reactor were heated under nitrogen to 240°C for two hours. The mixture was drained into a 5 gallon (16 l) vessel. The analyses of the liquid product were as follows: Total acetylatables 1.05 meq/g, total amine 0.87 meq/g and viscosity at 25°C, 2017 cs.

Example 15

JEFFAMINE® T-5000 (17.5 lbs/7.9 Kg), JEFFAMINE® D-2000 (7.5 lbs/3.4 Kg), and scrap RIM (2.50 lbs/1.1 Kg) were charged into a 5 gallon (16 1) nitrogen purged reactor. The contents of the reactor were heated under nitrogen to 240°C for two hours. The mixture was drained into a 5 gallon (16 l) vessel. The analyses of the liquid product were as follows: Total acetylatables 0.81 meq/g, total amine 0.64 meq/g and viscosity at 25°C, 5250 cs.

Example 16

JEFFAMINE® T-3000 (12.5 lbs/5.7 Kg), JEFFAMINE® D-2000 (12.5 lbs/5.7 Kg), and scrap RIM (3.75 lbs/1.7 Kg) were charged into a 5 gallon (16 1) nitrogen purged reactor. The contents of the reactor were heated under nitrogen to 240°C for 30 minutes. The mixture was drained into a 5 gallon (16 l) vessel. The analyses of the liquid product were as follows: Total acetylatables 1.09 meq/g, total amine 0.85 meq/g and viscosity at 25°C, 5763 cs.

Example 17

JEFFAMINE® T-3000 (6.25 lbs/2.8 Kg),

JEFFAMINE® D-2000 (6.25 lbs/2.8 Kg), Diethyltoluenediamine (DETDA) (12.5 lbs/5.7 Kg) and scrap RIM (2.50 lbs/1.1 Kg) were charged into a 5 gallon (16 1) nitrogen purged reactor. The contents of the reactor were heated under nitrogen to 240°C for two hours. HiFlo Super Cell (2000 $cm^3$)$^-$ was added to the stirred reaction mixture and the mixture was filtered into a 5 gallon (16 l) vessel. The analyses of the liquid product were as follows: Total acetylatables 5.88 meq/g, total amine 5.56 meq/g and viscosity at 25°C, 2622 cs.

Example 18

JEFFAMINE® T-3000 (7.60 lbs/3.5 Kg), JEFFAMINE® D-2000 (9.01 lbs/4.1 Kg), JEFFAMINE® D-400 (1.21 lbs/10.5 Kg) and scrap RIM (3.50 lbs/1.6 Kg) were charged into a 5 gallon (16 1) nitrogen purged reactor. The contents of the reactor were heated under nitrogen to 240°C for two hours. HiFlo Supercel (2000 $cm^3$) was added to the stirred reaction mixture and the mixture was filtered into a 5 gallon (16 l) vessel. Upon cooling, the product was a solid. The total acetylatables for this material was 5.88 meq/g.

Example 19

JEFFAMINE® T-5000 (21.20 lbs/9.6 Kg), JEFFAMINE® D-2000 (9.01 lbs/4.1 Kg), JEFFAMINE® D-400 (1.21 lbs/0.5 Kg) and scrap RIM (3.50 lbs/1.6 Kg) were charged into a 5 gallon (16 1) nitrogen purged reactor. The contents of the reactor were heated under nitrogen to 240°C for two hours. HiFlo Super Cell (2000 $cm^3$) was added to the stirred reaction mixture and the mixture was filtered into a 5 gallon (16 l) vessel. The analyses of the liquid product were as follows: Total acetylatables 0.97 meq/g, total amine 0.78 meq/g and viscosity at 25°C, 3897 cs.

Example 20

JEFFAMINE® T-5000 (20.78 lbs/9.4 Kg), JEFFAMINE® D-2000 (8.90 lbs/4.0 Kg), JEFFAMINE® D-400 (1.19 lbs/0.5 Kg), zinc stearate (0.70 lb/0.3 Kg) and scrap RIM (3.43 lbs/1.6 Kg) were charged into a 5 gallon (16 1) nitrogen purged reactor. The contents of the reactor were heated under nitrogen to 237°C for two hours. HiFlo Super Cell (2000 $cm^3$) was added to the stirred reaction mixture and the mixture was filtered into a 5 gallon (16 l) vessel. Upon cooling, the product was hazy in appearance. The analyses of the liquid product were as follows: Total acetylatables 1.06 meq/g, total amine 0.90 meq/g and viscosity at 25°C, 1642 cs.

Example 21

JEFFAMINE® T-3000 (15.9 lbs/7.2 Kg), JEFFAMINE® D-2000 (15.9 lbs/7.2 Kg) and scrap RIM (3.18 lbs/1.4 Kg) were charged into a 5 gallon (16 1) nitrogen purged reactor. The contents of the reactor were heated to 210°C, under nitrogen, for two hours, and the contents were drained into a 5 gallon (16 l) vessel. The analyses of the liquid product were as follows: Total acetylatables 1.04 meq/g, total amine 0.87 meq/g and viscosity at 25°C, 2253 cs.

Example 22 (Comparison)

The polyol G-5000 (30.0 lbs/13.6 Kg), the precursor to JEFFAMINE® T-5000 and scrap RIM (3.18 lbs/1.4 Kg) were charged into a 5 gallon (16 1) nitrogen purged reactor. The contents of the reactor were heated to 210°C, under nitrogen, for two hours and then drained into a 5 gallon (16 l) vessel. Upon inspection of the product, it was seen that the polyurea RIM scrap had not fully dissolved into the polyol. Only a small amount appeared to dissolve in the polyol.

The results of Examples 11 to 22 are summarized in Tables 3 to 5 below.

Table 3

| Example # | 11 | 12 | 13 | 14 | 15 | 16 |
|---|---|---|---|---|---|---|
| JEFFAMINE® T-5000, lbs / Kg | | 22.05/10.0 | | | 17.5/7.9 | |
| JEFFAMINE® T-3000, lbs / Kg | 15.9/7.2 | | 12.5/5.7 | 12.5/5.7 | | 12.5/5.7 |
| JEFFAMINE® D-2000, lbs / Kg | 15.9/7.2 | 9.45/4.3 | 12.5/5.7 | 12.5/5.7 | 7.5/3.4 | 12.5/5.7 |
| Scrap RIM, lbs / Kg (%) | 3.18/1.4 (10.0) | 3.50/1.6 (11.1) | 2.5/1.1 (10.0) | 2.5/1.1 (10.0) | 2.5/1.1 (10.0) | 3.75/1.7 (15.0) |
| Reaction Temperature, °C | 230 | 240 | 220 | 240 | 240 | 240 |
| Reaction Time, h | 2 | 2 | 2 | 2 | 2 | .5 |
| Filtered, [Y or N] | Y | Y | N | N | Y | N |
| Total Acetlytables, meq/g | 1.04 | 0.81 | 1.03 | 1.05 | 0.81 | 1.09 |
| Total Amines, meq/g | 0.88 | 0.63 | 0.87 | 0.87 | 0.64 | .85 |
| Viscosity, 25°C | 2168 | 8225 | 2054 | 2017 | 5250 | 5763 |

Table 4

| Example # | 17 | 18 | 19 | 20 | 21 |
| --- | --- | --- | --- | --- | --- |
| JEFFAMINE® T-5000, lbs / Kg | | | 21.2 / 9.6 | 20.78 / 9.4 | |
| JEFFAMINE® T-3000, lbs / Kg | 6.25 / 2.8 | 7.6 / 3.5 | | | 15.9 / 7.2 |
| JEFFAMINE® D-2000, lbs / Kg | 6.25 / 2.8 | 7.6 / 3.5 | 9.01 / 4.1 | 8.90 / 4.0 | 15.9 / 7.2 |
| DETDA lbs / Kg | 12.5 / 5.7 | 15.2 / 6.9 | | | |
| JEFFAMINE® D-400, lbs / Kg | | | 1.21 / 0.5 | 1.19 / 0.5 | |
| Zinc Stearate | | | | 0.70 / 0.3 | |
| Scrap RIM, lbs / Kg (%) | 2.5 / 1.1 (10.0) | 4.56 / 2.1 (15.0) | 3.50 / 1.6 (11.1) | 3.43 / 1.6 (10.9) | 3.18 / 1.4 (10.0) |
| Reaction Temperature, °C | 240 | 236 | 240 | 237 | 210 |
| Reaction Time, h | 2 | 2 | 2 | 2 | 2 |
| Filtered, [Y or N] | Y | Y | Y | Y | Y |
| Total Acetlytables, meq/g | 5.88 | 5.03 | 0.97 | 1.06 | 1.04 |
| Total Amines, meq/g | 5.56 | | 0.782 | 0.899 | 0.87 |
| Viscosity, 25°C | 2622 | | 3897 | 1642 | 2253 |

Table 5

| | |
|---|---|
| Example # | 22 |
| G-5000, lbs / Kg | 30.0 / 13.6 |
| Scrap RIM, lbs / Kg | 3.0 / 1.4 (10.0) |
| Reaction Temperature, °C | 210 |
| Reaction Time, h | 2 |
| Filtered, [Y or N] | N |
| Total Acetalytables, meq/g | 0.072 |
| Total Amines, meq/g | .118 |
| Viscosity at 25°C, cs | 1231 |
| Remarks | did not dissolve, solids present |

Example 23 (Control Experiment)

35 pounds (15.9 Kg) of a formulation consisting of DETDA (9.64 lbs/4.4 Kg), JEFFAMINE® T-3000 (12.26 lbs/5.6 Kg), JEFFAMINE® D-2000 (12.26 lbs/5.6 Kg) and zinc stearate (0.85 lbs/0.4 Kg) were charged into the B-component working tank of a Hi-tech RIM machine. The contents of this tank were heated to 140°F (60°C). The A-tank on the RIM machine was charged with quasi-prepolymer A (37.48 lbs/17.0 Kg) and heated to 128°F (53°C). The components were pressurized up to 2500 psi (17.2 MPa) on the A side and 2500 psi (17.2 MPa) on the B side and injected into the flat plaque mould which had been preheated to 162°F (72°C). The part was removed from the mould in 30 seconds. The resulting elastomer was post-cured at 250°F (121°C) for one hour. Physical properties of the elastomer are listed in Table 6.

Example 24

35 pounds (15.9 Kg) of a formulation consisting of DETDA (9.01 lbs/4.1 Kg), and the product of Example 11 (25.21 lbs/11.4 Kg) and zinc stearate (0.79 lbs/0.4 Kg) were charged into the B-component working tank of a Hitech RIM machine. The contents of this tank were heated to 144°F (62°C). The A-tank on the RIM machine was charged with quasi-prepolymer A (35.03 lbs/15.9 Kg) and heated to 135°F (57°C). The components were pressurized up to 2500 psi (17.2 MPa) on the A side and 2500 psi (17.2 MPa) on the B side and injected into the flat plaque mould which had been preheated to 165°F (74°C). The part was removed from the mould in 30 seconds. The resulting elastomer was post-cured at 250°F (121°C) for one hour. Physical properties of the elastomer are listed in Table 6.

Example 25 (Control Experiment)

35 pounds (15.9 Kg) of a formulation consisting of DETDA (10.48 lbs/4.8 Kg), JEFFAMINE® T-5000 (16.59 lbs/7.5 Kg), JEFFAMINE® D-2000 (7.11 lbs/3.2 Kg) and zinc stearate (0.83 lbs/0.4 Kg) were charged into the B-component working tank of a Hi-tech RIM machine. The contents of this tank were heated to 145°F (63°C). The A-tank on the RIM machine was charged with quasi-prepolymer A (37.62 lbs/17.1 Kg) and heated to 133°F (56°C). The components were pressurized to 2500 psi (17.2 MPa) on the A side and 2500 psi (17.2 MPa) on the B side and injected into the flat plaque mould which had been preheated to 165°F (74°C). The part was removed from the mould in 30 seconds. The resulting elastomer was post-cured at 250°F (121°C) for one hour. Physical properties of the elastomer are listed in Table 6.

Example 26

30 pounds (13.6 Kg) of a formulation consisting of DETDA (8.38 lbs/3.8 Kg), the product of Example 12 (21.02 lbs/9.5 Kg) and zinc stearate (0.60 lbs/0.3 Kg) were charged into the B-component working tank of a Hi-tech RIM machine. The contents of this tank were heated to 151°F (66°C). The A-tank on the RIM machine was charged with quasi-prepolymer A (30.08 lbs/13.7 Kg) and heated to 131°F (55°C). The components were pressurized to 2500 psi (17.2 MPa) on the A side and 2500 psi (17.2 MPa) on the B side and injected into the flat plaque mould which had been preheated to 160°F (72°C). The part was removed from the mould in 30 seconds. The resulting elastomer was post-cured at 250°F (121°C) for one hour. Physical properties of the elastomer are listed in Table 6.

Table 6

| Example # | 23 | 24 | 25 | 26 |
|---|---|---|---|---|
| Formulation, pbw | | | | |
| DETDA | 12.5 | 12.5 | 13.93 | 13.93 |
| JEFFAMINE® T-5000, lbs / Kg | | | 22.05 | |
| JEFFAMINE® T-3000, lbs / Kg | 15.9 | | | |
| JEFFAMINE® D-2000, lbs / Kg | 15.9 | | 9.45 | |
| Example 1 | | 34.98 | | |
| Example 2 | | | | 33.05 |
| Zinc Stearate | 1.1 | 1.1 | 1.1 | 1.1 |
| Quasiprepolymer A | 48.6 | 48.6 | 50.0 | 50.0 |
| PROPERTIES | | | | |
| Shore D | 60/56 | 61/58 | 61/57 | 67/63 |
| Tensile, psi / MPa | 3917 / 27.0 | 3433 / 23.7 | 3711 / 25.6 | 3801 / 26.2 |
| Tear, pli / N/m | 545 / 954 | 468 / 820 | 534 / 935 | 634 / 1110 |
| Elongation, % | 199 | 183 | 194 | 280 |
| Flexural Modulus, psi / MPa | | | | |
| 77°F / 25°C | 43500 / 300 | 35500 / 245 | 46000 / 317 | 54000 / 372 |
| -20°F / -29°C | 104500 / 721 | 78000 / 538 | 101000 / 696 | 92000 / 634 |
| Heat sag, 150 mm overhang | | | | |
| 311°F / 155°C | 39 | 42.25 | 18.5 | 2.7 |
| 350°F / 177°C | >65 | >65 | 47.25 | 35.75 |

N.B. The amounts here are converted into parts by weight from the weights in lbs/Kg in the Examples

## Example 27

30 pounds (13.6 Kg) of a formulation consisting of 28.1 pounds (12.8 Kg) of the material made in Example 4, 1.03 pounds (0.5 Kg) of water, 156 grams of Tegostab B-4113, 78.1 grams of Tegostab B-4690, and 19 grams of ZF-20 were charged into the B-component working tank of a Hi-tech RIM machine. The contents of this tank were heated to 140°F (60°C). The A-tank on the RIM machine was charged with quasi-prepolymer A (66.6 wt%) and Rubinate M (33.3 wt%) and heated to 120°F (49°C). The components were pressurized to 2500 psi (17.2 MPa) on the A side and 2500 psi (17.2 MPa) on the B side and injected, using a 0.83 wt ratio, into a mould having dimensions of 15"x4"x8" (381x102x203 mm) which had been preheated to 140°F (60°C). The part was

removed from the mould in 5 minutes. The density of the resulting foam was 6.67 lb/cu-ft (106.85 Kg/m³).

Example 28

32.50 pounds (14.8 Kg) of a formulation consisting of 31.22 pounds (14.2 Kg) of the material made in Example 21, 1.14 pounds (0.5 Kg) of water, 128.8 grams of Tegostab B-4113, 64.4 grams of Tegostab B-4690, and 12.8 grams of ZF-20 were charged into the B-component working tank of a Hi-tech RIM machine. The contents of this tank were heated to 150°F (66°C). The A-tank on the RIM machine was charged with VM25 (80.0 wt%) and Rubinate M (20.0 wt%) and heated to 120°F (49°C). The components were pressurized to 2500 psi (17.2 MPa) on the A side and 2500 psi (17.2 MPa) on the B side, and injected, using a 0.50 wt. ratio, into a round cup having a diameter of 5.5" (140 mm) and a height of 5.5" (140 mm). After filling the cup with foam, the cup was placed in an oven for 20 minutes at 140°F (60°C). The density of the resulting foam was 3.84 lb/cu-ft (61.52 Kg/m³).

The products described in Examples 11, 12, 2 and 3, were then used in aromatic spray polyurea elastomer systems.

A spray polyurea elastomer system, useful in coating and other spray applications, is prepared by the high pressure, high temperature impingement mixing of a resin blend and an isocyanate component. The isocyanate component is typically an isocyanate quasi-prepolymer of a modified methylene diisocyanate and a high molecular weight polyether polyol (either a diol or triol). The resin blend is simply a blend of polyoxyalkylene diamines and/or triamines and aromatic amine terminated chain extenders.

For spray application work, a GUSMER H-2000 proportioning unit, fitted with a GUSMER GX-7 spray gun was used. This spray equipment delivers the two components to the GX-7 spray gun at a 1:1 volume ratio. For processing, the block temperature was set at 150°F (66°C) for both components with a hose temperature of 150°F (66°C). Processing was at 1500 to 20000 psi (10.34 to 13.79 MPa) static, 1200 to 1500 psi (8.27 to 10.34 MPa) working.

Example 29 (Control Experiment)

A spray polyurea elastomer system was prepared by mixing an isocyanate quasi-prepolymer, XCP 1015A, with an equal volume of a resin blend, JEFFAMINE® T-3000, 35.5 parts; JEFFAMINE D-2000, 35.5 parts; and DETDA, 29.0 parts; in high pressure, high temperature impingement mix spray equipment. The spray polyurea elastomer system had an effective gel time of 2.0 sec. Elastomer physical property results can be found in Table 7.

Example 30

A spray polyurea elastomer system was prepared by mixing an isocyanate quasi-prepolymer, XCP 1015A, with an equal volume of a resin blend, the product of Example 11, 71.4 parts; and DETDA, 28.6 parts; in high pressure, high temperature impingement mix spray equipment. The spray polyurea elastomer system had an effective gel time of 2.2 sec. Elastomer physical property results can be found in Table 7.

Example 31 (Control Experiment)

A spray polyurea elastomer system was prepared by mixing an isocyanate quasi-prepolymer, XCP 1015A, with an equal volume of a resin blend, JEFFAMINE D-2000, 71.0 parts; and DETDA, 29.0 parts; in high pressure, high temperature impingement mix spray equipment. The spray polyurea elastomer system had an effective gel time of 2.0 sec. Elastomer physical property results can be found in Table 7.

Example 32

A spray polyurea elastomer system was prepared by mixing an isocyanate quasi-prepolymer, XCP 1015A, with an equal volume of a resin blend, the product of Example 3, 71.0 parts; and DETDA, 29.0 parts; in high pressure, high temperature impingement mix spray equipment. The spray polyurea elastomer system had an effective gel time of 1.8 sec. Elastomer physical property results can be found in Table 7.

Example 33 (Control Experiment)

A spray polyurea elastomer system was prepared by mixing an isocyanate quasi-prepolymer, XCP 1015A,

with an equal volume of a resin blend, JEFFAMINE T-5000, 68.5 parts; and DETDA, 31.5 parts; in high pressure, high temperature impingement mix spray equipment. The spray polyurea elastomer system had an effective gel time of 2.6 sec. Elastomer physical property results can be found in Table 7.

Example 34

A spray polyurea elastomer system was prepared by mixing an isocyanate quasi-prepolymer, XCP 1015A, with an equal volume of a resin blend, the product of Example 2, 68.4 parts; and DETDA, 31.6 parts; in high pressure, high temperature impingement mix spray equipment. The spray polyurea elastomer system had an effective gel time of 1.5 sec. This system was very difficult to spray due to the resin blend viscosity and the fast reactivity of the system. No samples were retained for physical testing.

Example 35 (Control Experiment)

A spray polyurea elastomer system was prepared by mixing an isocyanate quasi-prepolymer, XCP 1015A, with an equal volume of a resin blend, JEFFAMINE T-5000, 48.3 parts; JEFFAMINE D-2000, 20.7 parts; and DETDA, 31.0 parts; in high pressure, high temperature impingement mix spray equipment. The spray polyurea elastomer system had an effective gel time of 2.1 sec. Elastomer physical property results can be found in Table 7.

Example 36

A spray polyurea elastomer system was prepared by mixing an isocyanate quasi-prepolymer, XCP 1015A, with an equal volume of a resin blend, the product of Example 12, 69.4 parts; and DETDA, 30.6 parts; in high pressure, high temperature impingement mix spray equipment. The spray polyurea elastomer had an effective gel time of 2.9 sec. Elastomer physical property results can be found in Table 7.

Table 7

| Example # | 29 | 30 | 31 | 32 | 33 | 34 | 35 | 36 |
|---|---|---|---|---|---|---|---|---|
| Resin blends[1] (pbw) | | | | | | | | |
| JEFFAMINE® T-5000 | - | - | - | - | 68.5 | - | 48.3 | - |
| JEFFAMINE® T-3000 | 35.5 | - | - | - | - | - | - | - |
| JEFFAMINE® D-2000 | 35.5 | - | 71.0 | - | - | - | 20.7 | - |
| Example 11 | - | 71.4 | - | - | - | - | - | - |
| Example 12 | - | - | - | - | - | - | - | 69.4 |
| Example 2 | - | - | - | - | - | 68.4 | - | - |
| Example 3 | - | - | - | 71.0 | - | - | - | - |
| DETDA | 29.0 | 28.6 | 29.0 | 29.0 | 31.5 | 31.6 | 31.0 | 30.6 |
| PROCESSING | | | | | | | | |
| INDEX | 1.05 | 1.05 | 1.05 | 1.05 | 1.05 | 1.05 | 1.05 | 1.05 |
| Iso/Res volume ratio, | 1.00 | 1.00 | 1.00 | 1.00 | 1.00 | 1.00 | 1.00 | 1.00 |
| Iso/Res weight ratio, | 1.15 | 1.14 | 1.15 | 1.15 | 1.14 | 1.14 | 1.15 | 1.14 |
| Effective gel time, sec | 2.0 | 2.2 | 2.0 | 1.8 | 2.6 | 1.5 | 2.1 | 2.9 |
| Elastomer Physical Properties | | | | | | | | |
| Tensile strength, psi / MPa | 2217/15.3 | 2018/13.9 | 1828/12.6 | 2059/14.2 | 1618/11.2 | - | 1948/13.4 | 1673/11.5 |
| Elongation, % | 163 | 168 | 215 | 183 | 133 | - | 160 | 67 |
| Tear strength, pli / N/m | 404 /708 | 396 /694 | 390 /683 | 414 /725 | 347 /608 | - | 421 / 737 | 342 /599 |
| Shore D Hardness<br>0 sec<br>10 sec | <br>50<br>47 | <br>48<br>44 | <br>51<br>47 | <br>48<br>44 | <br>50<br>45 | <br>-<br>- | <br>49<br>45 | <br>47<br>43 |
| 100% Modulus, psi / MPa | 1829/12.6 | 1699/11.7 | 1418/9.8 | 1722/11.9 | 1526/10.5 | - | 1709/11.8 | - |

GLOSSARY

| | | |
|---|---|---|
| JEFFAMINE® T-5000 | A trifunctional polyoxyalkyleneamine with a molecular weight of approximately 5000 | Sold by Texaco Chemical Company |
| JEFFAMINE® T-3000 | A trifunctional polyoxyalkyleneamine with a molecular weight of approximately 3000 | Sold by Texaco Chemical Company |
| JEFFAMINE® D-2000 | A trifunctional polyoxyalkyleneamine with a molecular weight of approximately 2000 | Sold by Texaco Chemical Company |
| Diethyltoluenediamine (DETDA) | Aromatic diamine chain extender | Sold by Ethyl Corporation |
| VM25 | Aromatic polyisocyanate | Sold by ICI |
| RUBINATE M | A polymeric isocyanate | Sold by ICI |
| ISONATE® 143L | A polymeric isocyanate | Sold by Dow Chemical Company |
| PPG-2000 | A difunctional polyether polyol with a 2000 molecular weight | Sold by Texaco Chemical Company |
| TEGOSTAB B-4113 and TEGOSTAB B-4690 | Surfactants which act as foam stabilizers | Sold by Goldschmidt |
| Quasi Prepolymer XCP 1015A | 15.5% -NCO isocyanate quasi-prepolymer | Sold by ICI Polyurethanes |

**Claims**

1. A method for making polyureas by reacting a polyisocyanate with a polyoxyalkylene amine, characterised in that the polyoxyalkylene amine contains in solution the reaction product of a polyisocyanate and an active hydrogen compound.

2. A method according to Claim 1 characterised in that the polyoxyalkyleneamine has the formula:

$$H_2NCH(CH_3)CH_2\text{-}[OCH_2CH(CH_3)]_xNH_2$$

wherein x is 2 to 68.

3. A method according to Claim 1 characterised in that the polyoxyalkyleneamine has the formula:

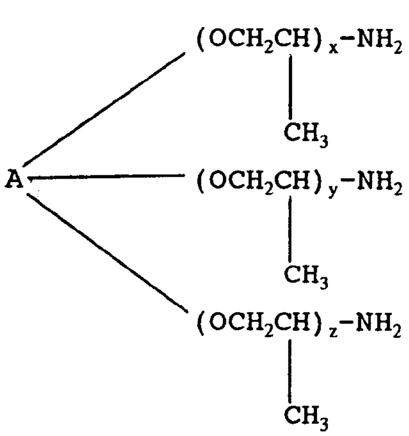

wherein A is the residue of a triol initiator, x, y and z are each 1 to 28, and the sum of x, y and z is 3 to 85.

4. A method according to Claim 1 characterised in that the polyoxyalkylene amine has the formula

$$H_2NCH(CH_3)CH_2[OCH(CH_3)CH_2]_x\text{-}[OCH_2CH_2]_y\text{-}[OCH_2CH(CH_3)]_zNH_2$$

wherein x + z is 2 to 10, and y is 1 to 50.

5. A method according to any one of Claims 1 to 4 characterised in that the polyureas are formed by a reaction injection moulding process, a spraying process or a foaming process.

6. A method according to any one of Claims 1 to 4 characterised in that the polyureas are formed as a paint or thermoplastic material.

European Patent Office

# EUROPEAN SEARCH REPORT

Application Number

EP 93 30 3376

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 310 974 (BAYER)<br>* claims 1,4,8 *<br>* column 5, line 5 - line 38 *<br>* column 9, line 23 - column 10, line 16 *<br>* example 3 *<br>--- | 1 | C08L75/02<br>C09D175/02<br>C08G18/50<br>C08G18/32<br>//(C08L75/02, 75:00)<br>(C09D175/02, 175:00) |
| A | DE-A-2 638 759 (BAYER)<br>* claims 1-4 *<br>* page 27, paragraph 2 - page 28, paragraph 2 *<br>----- | 1 | |
| | | | TECHNICAL FIELDS SEARCHED (Int. Cl.5 ) |
| | | | C08L<br>C09D<br>C08G |

The present search report has been drawn up for all claims

| Place of search | Date of completion of the search | Examiner |
|---|---|---|
| THE HAGUE | 05 AUGUST 1993 | VAN PUYMBROECK M. A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P0401)